# EUROPÄISCHE PATENTSCHRIFT

(11) **EP 2 295 312 B1**
(45) Veröffentlichungstag und Bekanntmachung des Hinweises auf die Patenterteilung: **23.09.2015**
(21) Anmeldenummer: 10006619.0
(22) Anmeldetag: 25.06.2010
(51) Int. Cl.: B62D 21/02

(54) **Rahmenlängsträger eines Nutzfahrzeugs**
Frame side supports of a commercial vehicle
Support longitudinal de châssis d'un véhicule utilitaire

(30) Priorität: 10.09.2009 DE 102009041050
(43) Veröffentlichungstag der Anmeldung: 16.03.2011
(73) Patentinhaber: MAN Truck & Bus AG, 80995 München (DE)
(72) Erfinder: Gunzert, Urs, 80993 München (DE); Negele, Klaus, 85586 Poing (DE)

(56) Entgegenhaltungen:
- WO-A2-02/053447
- CA-A1- 2 578 884
- DE-A1- 4 322 717
- FR-A- 343 238

## Beschreibung

### Technisches Gebiet:

Die Erfindung betrifft einen Rahmenlängsträger eines Nutzfahrzeugs, der jeweils einen aus einem Profil gebildeten Ober- und einen Untergurt aufweist, die durch zumindest annähernd vertikal angeordnete Verbindungselemente mit einander verbunden sind.

### Stand der Technik:

Fahrzeugfahrgestelle, insbesondere Nutzfahrzeugfahrgestelle lassen sich nach Anordnung und Funktion in die vier wesentlichen Baugruppen Fahrgestellrahmen, Fahrerhaus, Fahrwerk und Antriebsstrang gliedern. Hierbei ist der Fahrgestellrahmen die zentrale tragende Baugruppe des Fahrgestells, an der sowohl Baugruppen des Fahrwerks als auch der Aufbau befestigt sind.

Im Nutzfahrzeugbau werden üblicherweise insbesondere für Lastkraftwagen, Anhänger und Auflieger, aber auch für Busse, die erst in einem späteren Montageschritt ihren Aufbau erhalten, volltragende Fahrgestellrahmen verwendet. Bei Personenkraftwagen und der überwiegenden Anzahl von Omnibussen haben sich dagegen selbsttragende Fahrgestellrahmen durchgesetzt.

Die unterschiedlichen Rahmenkonzeptionen unterscheiden sich durch den Rahmengrundriss, also die Anordnung der tragenden Teile zueinander, und den Stilquerschnitt, also die Querschnittsform der tragenden Elemente. Übliche Nutzfahrzeug- insbesondere Lastkraftwagenrahmen, werden als Leiterrahmen, manchmal auch als "Zweistiel-Flachrahmen" bezeichnet, ausgebildet, die in jedem Fall biegesteif und in Abhängigkeit der Form der Profilquerschnitte entweder torsionsweich oder torsionssteif sind. Bei torsionsweichen Fahrgestellrahmen bestehen Längs- und Querträger aus offenen Profilen (U-, I- oder Hutprofil). Im Vergleich zu den offenen Profilen sind geschlossene Profile etwa gleicher Hauptabmessungen um ein vielfaches torsionssteifer. Die Wahl des geeigneten Profils richtet sich hierbei vor allem nach dem Einsatzzweck des Fahrzeugs, ob es bspw. im Gelände oder auf der Straße genutzt werden soll, und der Torsionssteifigkeit des Aufbaus bzw. der Nachgiebigkeit der Aufbaubefestigung.

Zum weitaus überwiegenden Teil werden Nutzfahrzeugfahrgestelle als verwindungsweiche Leiterrahmen aus U-förmigen Längsträgern mit stehendem Steg ausgeführt. Damit die Einleitung der Vertikalkräfte über den Aufbau und die Aufbaukonsolen bzw. das Fahrwerk und die entsprechenden Lagerböcke in den Rahmen in der Nähe des Schubmittelpunktes erfolgt, werden die Längsträger mit der Öffnung nach innen angeordnet. Unter den derzeit eingesetzten Fahrgestellen sind Fahrgestellrahmen bekannt, die entweder über gerade Längsträgerprofile mit durchgehend konstantem Querschnitt oder aber über horizontal oder vertikal gekröpfte Profile, teilweise sogar mehrfach gekröpfte Profile, verfügen.

Im Allgemeinen bleibt der Raum oberhalb der Rahmenoberkante, also den so genannten Obergurten der Rahmenlängsträger, im Bereich hinter dem Fahrerhaus dem Aufbau vorbehalten, unterhalb befinden sich Antriebstrang und Fahrwerk. Zu den üblicherweise mittelbar oder unmittelbar am Fahrgestellrahmen im Bereich unterhalb seiner Oberkante befestigten Fahrzeugkomponenten zählen bspw. Kraftstoffbehälter, Batterie, Druckluftbehälter, Werkzeugkasten, Ersatzrad, Abgasanlage, Unterfahrschutz, Anhängerkupplung sowie seitliche Schutzvorrichtungen.

Neben den klassischen Rahmenlängsträgern, die aus einem der zuvor beschriebenen Profile gebildet werden und jeweils über Ober- und Untergurt sowie einen die beiden Gurte verbindenden vertikal angeordneten Steg verfügen, sind beispielsweise aus der DE 10 2007 056 404 A1 Rahmenlängsträger eines Fahrgestellrahmens bekannt, die durch zwei in Fahrzeuglängsrichtung verlaufende Schienen gebildet werden, die in vertikaler Richtung durch geeignete Verbindungselemente miteinander verbunden sind. Die beiden Schienen, die in diesem Fall den Ober- bzw. Untergurt des Rahmenlängsträgers bilden, sind U-förmig ausgeführt, wobei die Öffnungen der vertikal übereinander angeordneten Schienen einander zugewandt sind. In den Öffnungen, also im Bereich zwischen den Schenkeln der Schienen, sind jeweils Befestigungsflächen vorgesehen, an denen die vertikal verlaufenden Träger, vorzugsweise durch Schweißen, befestigt werden.

Ferner ist aus der CA 2 578 884 ein Leiterrahmen für einen Fahrzeuganhänger bekannt, bei dem die Rahmenlängsträger ebenfalls jeweils durch Profile gebildet werden, die mit Hilfe geeigneter, vertikal angeordneter Verbindungselemente miteinander verbunden sind. Ein wesentlicher Gedanke der vorgeschlagenen technischen Lösung besteht in diesem Zusammenhang darin, die Profile als T-Profile auszuführen, deren Fußbereich zwei Schenkel aufweist, zwischen denen die vertikal angeordneten Verbindungselemente eingeklemmt, vernietet und so mit den in Anhängerlängsrichtung verlaufenden Profilen verbunden werden.

Nachteilig an den aus dem Stand der Technik bekannten, quasi modulartig aufgebauten Rahmenlängsträgern ist vor allem, dass die Befestigung der vertikal verlaufenden Verbindungselemente in einem Bereich erfolgt, der teilweise erhebliche Biege- und/oder Torsionskräfte aufnehmen muss. Gerade in diesem Bereich Verbindungselemente, wie Schweißnähte oder Schraub- bzw. Nietverbindungen, vorzusehen, stellt ein nicht unerhebliches Risiko dar. Darüber hinaus weisen die bekannten Rahmenlängsträger den Nachteil auf, dass sich die verwendeten offenen Längsprofile bei Einleitung von Torsionskräften verwinden und somit zur Verwölbung neigen.

Ausgehend von dem bekannten Stand der Technik liegt der Erfindung die Aufgabe zugrunde, ein Rahmenkonzept anzugeben, dass den modularen Aufbau eines Fahrgestellrahmens verbunden mit erheblichen Gewichteinsparpotentialen ermöglicht und gleichzeitig die aus dem Stand der Technik bekannten, zuvor erläuterten Probleme zumindest weitgehend ausschließt. Vor allem sollten die Rahmenlängsträger derart ausgeführt werden, dass diese flexibel an unterschiedlichste Fahrzeugtypen anzupassen sind und auf verhältnismäßig einfache Weise den Anbau von Fahrzeugkomponenten ermöglichen. Weiterhin soll der anzugebende Fahrgestellrahmen einfach herzustellen und zu montieren sein, ohne dass er im Vergleich zu den bekannten Rahmen Nachteile hinsichtlich der geforderten Festigkeitskennwerte aufweist. Das anzugebende Rahmenkonzept soll es auf bevorzugte Weise ermöglichen, den Fahrgestellrahmen eines Fahrzeugs, insbesondere eines schweren Nutzfahrzeugs, ohne erheblichen Aufwand kraftflussgerecht zu gestalten.

Die vorstehend geschilderte Aufgabe wird mit einem Rahmenlängsträger gemäß Anspruch 1 gelöst. Vorteilhafte Ausführungsformen der Erfindung sind Gegenstand der abhängigen Ansprüche und werden unter teilweiser Bezugnahme auf die Figuren in der folgenden Beschreibung näher erläutert.

Erfindungsgemäß ist ein Rahmenlängsträger eines Nutzfahrzeugs, der jeweils einen aus einem Profil gebildeten Ober- und einen Untergurt aufweist, die durch zumindest annähernd vertikal angeordnete Verbindungselemente mit einander verbunden sind, derart weitergebildet worden, dass wenigstens eines der Profile, die jeweils den Ober- und den Untergurt bilden, als geschlossenes Hohlprofil ausgeführt ist, an dem zumindest eine Lasche zur Befestigung des Verbindungselements vorgesehen ist.

Ein erfindungsgemäß ausgeführter Rahmenlängsträger bietet somit den Vorteil, dass durch die Verwendung eines Hohlprofils für den Ober- und/oder Untergurt eine Profilverwindung bzw. Verwölbung in diesem Bereich ausgeschlossen werden kann. Darüber hinaus ist die Lasche auf bevorzugte Weise vollständig außerhalb des Hohlprofils angeordnet, so dass insbesondere in den Rahmenlängsträger eingeleitete Torsionskräfte zumindest weitgehend vom Hohlprofil, also dem Ober- und/oder Untergurt aufgenommen werden. Um gleichzeitig die Befestigung eines Aufbaus am Rahmen mit verhältnismäßig einfachen Mitteln sicher stellen zu können, ist das Hohlprofil vorzugsweise derart ausgeführt, dass seine zur Anbindung des Aufbaus bzw. der Aufbaukonsolen vorgesehene Oberseite eine ebene Fläche aufweist.

Die Erfindung ermöglicht es, den Kraftfluss in einem Rahmenlängsträger im Hinblick auf die anwendungsspezifischen Anforderungen an das Fahrzeug zu optimieren und gleichzeitig einen Rahmenlängsträger bereitzustellen, der in Bezug auf sein Gewicht und das Herstellungsverfahren erhebliche Einsparpotentiale gegenüber den bekannten technischen Lösungen bietet. Es ist in diesem Zusammenhang denkbar, für den Ober- und/oder den Untergurt jeweils Endlosbiege- und / oder Strangpressprofile vorzusehen. Erfindungsgemäß werden Ober- und/oder Untergurt erst während des Montageprozesse durch entsprechend geeignete, weitgehend vertikal angeordnete Verbindungselemente miteinander verbunden.

Die für die Befestigung der Verbindungselemente benötigten Laschen werden bereits bei der Herstellung der Hohlprofile, durch Biegeumformen, an den Hohlprofilträger angeformt.

In einer speziellen Ausführungsform der Erfindung verfügt die Lasche über zumindest eine Ausnehmung, die geeignet ist, Befestigungsmittel zur Befestigung der vertikal verlaufenden Verbindungselemente aufzunehmen. Auf bevorzugte Weise werden als Befestigungselemente Schrauben und / oder Nieten eingesetzt. Selbstverständlich ist es ergänzend oder alternativ denkbar, die Verbindungselemente mit Hilfe geeigneter Schweiß- und/oder Klebeverbindungen an den Laschen zu befestigen. Die Wahl eines geeigneten Befestigungsmittels bzw. einer zweckmäßigen Verbindungstechnik hängt letztendlich von den Belastungen, die auf das Verbindungselement, bspw. aufgrund der Befestigung weiterer Fahrzeugkomponenten, wirken.

Die Auflösung der bisher verwendeten einstückigen, vorzugsweise U-förmigen Rahmenlängsträger in die separaten Bauteile Ober- sowie Untergurt und Verbindungselement bietet den Vorteil, die Gestaltung des Fahrgestellrahmens hinsichtlich seines Gewichts zu optimieren. Werden die Rahmenlängsträger aus den üblicherweise verwendeten Feinkornbaustählen hergestellt, sind Gewichtseinsparungen vor allem dadurch zu erreichen, dass die Ober- und Untergurte nicht über die gesamte Länge des Rahmenlängsträgers, sondern mit Hilfe geeigneter Verbindungselemente quasi abschnittsweise, miteinander verbunden sind. Die einzelnen Abstände, nämlich die Abstände der einzelnen Verbindungselemente zu einander, die horizontalen Abstände der Obergurte oder der Untergurte sowie die vertikalen Abstände zwischen Ober- und Untergurten, können in Abhängigkeit der konstruktiven Anforderungen an die für ein Fahrzeug benötigten Komponenten, insbesondere das Fahrwerk, die Achsaufhängung, den Antriebsstrang und die Abgasanlage nahezu frei variiert werden.

Neben der wenigstens einen vertikalen Verbindung zwischen Ober- und Untergurt, von denen wenigstens einer durch ein Hohlprofil gebildet wird, sind die Ober- und/oder Untergurte und/oder die Verbindungselemente unterschiedlicher Rahmenseiten jeweils über Querträger miteinander verbunden. Auf diese Weise wird ein verbindungssteifer Rahmen erzeugt.

In einer speziellen Weiterbildung der Erfindung werden ferner die Hohlprofile für den Ober- und/oder Untergurt und/oder die Verbindungselemente zumindest teilweise aus einem Leichtmetall, vorzugsweise Aluminium, hergestellt. Selbstverständlich ist es ebenfalls denkbar, die Rahmenlängsträger aus unterschiedlichen Werkstoffen zu konzipieren, z.B. aus Stahl oder einer Stahllegierung. Die Aufzählung ist dabei nur beispielhaft gedacht und keinesfalls ausschließlich gemeint. So könnten alternativ oder in Ergänzung zur Verwendung der üblicherweise eingesetzten Feinkornbaustähle für die Hohlprofilträger oder für das wenigstens eine Verbindungselement Aluminium, Aluminiumlegierungen oder auch Kunststoffe, insbesondere Verbundkunststoffe, wie CFK oder GFK, verwendet werden. Die Befestigung wenigstens eines Verbindungselementes an der Lasche des Endlosprofilträgers kann auch in diesen Fällen wahlweise mit Hilfe entsprechend geeigneter Befestigungselemente, insbesondere Schrauben oder Nieten, oder auch durch Schweißen und / oder Kleben realisiert werden.

In einer speziellen Ausführungsform der Erfindung ist die Lasche nicht einstückig mit dem Hohlprofilträger ausgeführt, sondern wird als separates Bauteil hergestellt und daraufhin, vorzugsweise durch Schweißen, mit dem Hohlprofilträger verbunden.

Weiterhin ist es in Bezug auf eine spezielle Ausführung der Erfindung denkbar, dass wenigstens ein Verbindungselement zur mittelbaren oder unmittelbaren Befestigung weiterer Fahrzeugkomponenten verwendet wird. In diesem Fall werden beispielsweise der Tank, ein Batteriekasten, ein Reserverad, ein Unterfahrschutz, ein Druckluftbehälter, Abgasanlagenbauteile, eine Zentralschmierung oder ein Staukasten direkt oder über entsprechend geeignete Halter an dem wenigstens einen Verbindungselement befestigt.

Ferner ist es denkbar, die Ober- und Untergurte bzw. die diese zumindest abschnittsweise bildenden Hohlprofile mit Lasche derart anzuordnen, dass zwischen ihnen Dämpfungs- oder Federelemente des Fahrwerks angeordnet werden können. Ebenfalls könnten beispielsweise Bauteile der Achsanlenkung ganz oder teilweise in dem in vertikaler Richtung zwischen dem oberen und dem unteren, den Ober- bzw. Untergurt bildenden Hohlprofilträger angeordnet sein. Bei einer derartigen konstruktiven Gestaltung wird der Abstand zwischen dem Ober- und dem Untergurt derart gewählt, dass der entstehende Freiraum ausreichend Platz für zumindest eines der oben genannten Bauteile bietet. In einer speziellen Weiterbildung ist der Ober- und/oder der Untergurt in horizontaler und/oder in vertikaler Richtung wenigsten einmal gekröpft, damit der Zwischenraum ausreichend Platz für die dort anzuordnenden Bauteile bietet.

Eine ganz besonders geeignete Weiterbildung der Erfindung sieht in diesem Zusammenhang vor, dass mittelbar oder unmittelbar wenigstens Teile einer Dämpfungs- oder Federeinheit an dem wenigstens einen Verbindungselement zwischen dem oberen und/oder unteren, den Ober- bzw. Untergurt bildenden Hohlprofil befestigt werden. Weiterhin ist es denkbar, dass Teile einer Dämpfungs- oder Federeinheit selbst die Funktion eines Verbindungselements übernehmen, indem sie etwa im oberen Bereich mit der Lasche des Obergurts und/oder im unteren Bereich mit der Lasche des Untergurts verbunden sind.

Die Hohlprofile selbst, die den Ober- und / oder den Untergurt bilden, sind aus einem Stück, insbesondere durch Strangpressen, hergestellt. Erfindungsgemäß wird das geschlossene Hohlprofil durch Biegen, insbesondere Rollbiegen hergestellt und werden die in Längsrichtung verlaufenden Kanten des Profils miteinander verschweißt.

Eine ganz spezielle Ausführungsform der Erfindung sieht in diesem Zusammenhang vor, dass das Hohlprofil durch Rollbiegen hergestellt wird und an einer Seite des Hohlprofils bereits eine Lasche, vorzugsweise über die gesamte Länge des Profils, angeformt wird. In diesem Zusammenhang ist es besonders vorteilhaft, wenn die verbleibenden Längskanten des Profils, die über die Länge des Hohlprofils eine Längsnut bilden, verschweißt werden, wobei sich hierfür insbesondere Press- oder Reibschweißen anbietet.

Der guten Ordnung halber wird allerdings darauf hingewiesen, dass der erfinderische Gedanke nicht auf ein spezielles Herstellungsverfahren der Hohlprofile beschränkt ist. Vielmehr beruht der wesentlich erfinderische Gedanke darauf, ein Hohlprofil mit einer außerhalb des Hohlraums vorgesehenen Lasche vorzusehen und zur Herstellung eines Rahmenlängsträgers ein derart weitergebildetes Hohlprofil vertikal oberhalb oder unterhalb eines weiteren Profils anzuordnen, wobei das weitere Profil vorzugsweise auch eine Lasche aufweist und ganz besonders bevorzugt ebenfalls als Hohlprofil ausgebildet ist, und die Profile in Längsrichtung mit Hilfe wenigstens eines Verbindungselements zu verbinden, das an wenigstens einer Seite an einer Lasche eines Hohlprofilelements befestigt wird. Diese erfindungsgemäße Ausführung eines Rahmenlängsträgers ermöglicht eine sehr flexible Gestaltung unterschiedlicher Rahmen. Insbesondere ist ein derart aus den unterschiedlichen Komponenten oberes und/oder unteres Hohlprofil mit Lasche sowie Verbindungselement zusammengebauter Rahmenlängsträger hinsichtlich seines Gewichts und des Kraftflusses verhältnismäßig einfach zu optimieren.

Im Folgenden wird die Erfindung ohne Beschränkung des allgemeinen Erfindungsgedankens unter Bezugnahme auf die Figuren näher erläutert. Es zeigen:
- Fig. 1:: Fahrgestellrahmen eines Lastkraftwagens;
- Fig. 2:: perspektivische Schnittdarstellung eines Teils eines erfindungsgemäß ausgeführten Rahmenlängsträgers;
- Fig. 3:: Schnittansicht sowie eine Seitenansicht eines Hohlprofils mit einstückig angeformter Lasche;
- Fig. 4:: Schnittansicht eines erfindungsgemäß ausgeführten Rahmenlängsträgers mit Ober- und Untergurt;
- Fig. 5:: Fahrgestellrahmen eines zweiachsigen Lastkraftwagens.

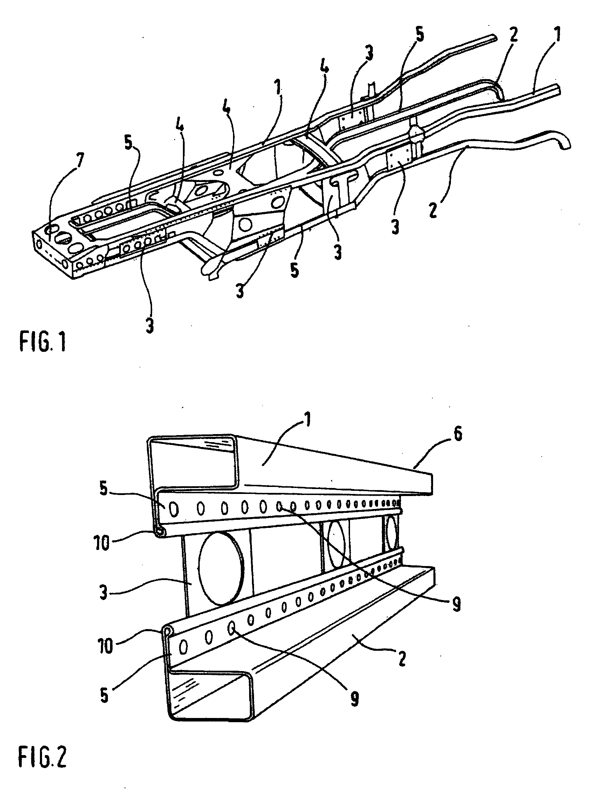

Figur 1 zeigt einen Fahrgestellrahmen eines Lastkraftwagens mit erfindungsgemäß ausgeführten Rahmenlängsträgern. Hierbei sind jeweils zwei obere Hohlprofile 1 sowie zwei untere Hohlprofile 2 vorgesehen, wobei die oberen Hohlprofile 1 den Obergurt und die unteren Hohlprofile 2 den Untergurt der Rahmenlängsträger 6 bilden. Die oberen und unteren Hohlprofile 1, 2, die jeweils ein geschlossenes Profil aufweisen, sind über annähernd in vertikaler Richtung verlaufende Verbindungselemente 3 miteinander verbunden. In horizontaler Richtung sind die sich in Fahrzeuglängsachse erstreckenden Hohlprofile 1, 2 sowie die Verbindungselemente 3 der rechten Seite über Querträger 4 mit den entsprechenden Hohlprofilen 1, 2 und Verbindungselementen 3 der linken Fahrzeugseite bzw. Rahmenseite verbunden.

In Abhängigkeit des Kraftflusses und der konstruktiven Gestaltung eines Fahrzeugrahmens gibt es grundsätzlich die Möglichkeit, die Querträger 4 mittelbar oder unmittelbar an den Verbindungselementen 3 und/oder den Hohlprofilen 1, 2, vorzugsweise an den Laschen 5 der Holprofile 1, 2 zu befestigen. In dem in Figur 1 dargestellten Ausführungsbeispiel sind die Querträger 4 über geeignete Befestigungs- bzw. Lagerelemente an Laschen 5 des oberen Hohlprofils 1 und des unteren Hohlprofils 2 befestigt.

Die Laschen 5 verlaufen in Längsrichtung der Hohlprofile 1, 2, die sich durch ihr geschlossenes Profil auszeichnen, und sind einseitig mit den Hohlprofilen 1, 2 verbunden. Die Laschen 5 sind jeweils dem in vertikaler Richtung beabstandet gegenüberliegenden Hohlprofil zugewandt und verfügen über ausgestanzte und/oder gebohrte Durchgangslöcher 9, an denen die Verbindungselemente 3 und/oder weitere Fahrzeugkomponenten unmittelbar oder mittelbar mit Hilfe geeigneter Halter und Befestigungsmitteln, wie Schrauben und/oder Nieten, befestigbar sind.

An den Laschen 5 der Hohlprofile werden zunächst die Verbindungselemente 3, anschlie-ßend ggf. die Querträger 4 und schließlich nach Bedarf und konstruktiver Gestaltung weitere Fahrzeugkomponenten mittelbar oder unmittelbar befestigt.

In Figur 2 ist in einer perspektivischen Schnittdarstellung ein Teil eines erfindungsgemäß ausgeführten Rahmenlängsträgers 6 dargestellt. Gegenüber der klassischen Form von Rahmenlängsträgern, die bevorzugt durch ein halboffenes, insbesondere ein U-Profil gebildet werden, zeichnet sich der Rahmenlängsträger 6 gemäß Figur 2 dadurch aus, dass der Ober- und der Untergurt jeweils durch geschlossene Profile, also Hohlprofile 1, 2 gebildet werden. Die benötigten Hohlprofile 1, 2 werden mit Hilfe eines geeigneten Verfahrens, wie etwa Strangpressen oder Rollbiegen, als Endlosprofile hergestellt, auf das erforderliche Maß abgelängt und sofern erforderlich mittels Kalt- oder Warmumformen in die gewünschte Form gebracht.

Im Anschluss an die Produktion der Hohlprofile 1, 2 erfolgt die Herstellung bzw. Montage eines Rahmenlängsträgers 6. Hierbei werden das obere und das untere Hohlprofil 1, 2 derart zueinander angeordnet, dass die an den Hohlprofilen 1, 2 angeformten Laschen 5 jeweils einander zugewandt sind.

Bei dem in Figur 2 dargestellten Ausführungsbeispiel sind die Laschen 5 durch ein Biegerollverfahren einstückig mit dem Hohlprofil hergestellt worden. Die Verbindung des oberen mit dem unteren, den jeweiligen Gurt des Rahmenlängsträgers 6 bildenden Hohlprofils 1, 2 erfolgt durch vertikal angeordnete Verbindungselemente 3. Die Verbindungselemente 3 sind ihrerseits über die Laschen 5 mit den Hohlprofilen 1,2 verbunden. Da sich die Laschen 5 vollständig außerhalb des geschlossenen Profils befinden, ist eine problemlose Befestigung der Verbindungselemente 3 von außen an den Laschen 5 möglich. Ferner wird auf diese Weise sicher gestellt, dass die Befestigung der Verbindungselemente 3 in einem Bereich der Ober- und/oder Untergurte erfolgt, in dem weitgehend keine Torsionskräfte, insbesondere keine Kräfte aufgrund von Verwindungen, aufgenommen werden müssen.

Ein weiterer fertigungstechnischer Vorteil des beschriebenen, im Wesentlichen aus zwei Hohlprofilen 1, 2 und entsprechenden vertikal angeordneten Verbindungselementen 3 modular aufgebauten Rahmenlängsträgers 6 besteht darin, dass hierdurch eine separate Herstellung, Transport, Lagerung und Bereitstellung dieser Bauteile ermöglicht wird. Grundsätzlich ist in diesem Zusammenhang auch die Vorgruppierung der Verbindungselemente 3 mit weiteren Fahrzeugkomponenten und/oder Haltern denkbar.

Das in Figur 2 gezeigte Hohlprofil 1, 2 mit Lasche 5 wird durch ein Biegeverfahren hergestellt, wobei im Anschluss an ein vorzugsweise durchgeführtes Rollbiegen die beiden verbleibenden Enden bzw. Längskanten, also die Bandkanten des gebogenen Hohlprofils, die eine Nut einschließen, miteinander verschweißt werden.

Um auf bevorzugte Weise ein Verschweißen der Längskanten des Profils zu ermöglichen, wird der Biegeprozess derart ausgeführt, dass sich die in Längsrichtung des Profils verlaufende Nut nach Abschluss des Biegens im Bereich des Hohlprofils 1, 2 befindet. Eine entsprechend geeignete Positionierung der zu verschweißenden Längsnut wird hierbei unter anderem dadurch erreicht, dass die Lasche 5 durch Umbiegen des Ausgangsmaterials erzeugt wird, wobei am Ende der Lasche 5 eine Schlaufe 10 vorgesehen ist, durch die der Biegeradius vergrößert wird. Aufgrund dieses Umbiegens des Ausgangsmaterials verfügt die Lasche 5 etwa über die doppelte Wandstärke als das übrige Profil.

Selbstverständlich ist es grundsätzlich ebenfalls denkbar, zunächst ein geschlossenes Profil herzustellen, wahlweise durch Strangpressen und/oder Biegeumformen, und anschließend, insbesondere durch Schweißen, eine Lasche 5 an dem Hohlprofil 1,2 zu befestigen.

Aus fertigungstechnischer Sicht bietet es allerdings erhebliche Vorteile, das geschlossene Hohlprofil 1, 2 mit Lasche 5 im Wege eines Rollbiegeverfahrens mit anschließendem Längsnutschweißen mittels Pressschweißen einstückig herzustellen. In diesem Zusammenhang zeichnet sich Pressschweißen vor allem dadurch aus, dass die Stoßstellen unter Druck auf Temperaturen um etwa 1200°C erwärmt und ohne Zusatzstoff miteinander verbunden werden. Zu den für die Herstellung eines erfindungsgemäßen Hohlprofils 1, 2 grundsätzlich in Frage kommenden Pressschweißverfahren zählen elektrisches Widerstandsschweißen, Reibschweißen, Bolzenschweißen, Feuerschweißen, Gaspressschweißen oder Thermitschweißen. Eine besonders bevorzugte Art, das Profil bzw. insbesondere die Kanten des Profils während des Preßschweißens zu erhitzen, stellt die induktive Erhitzung dar, wobei das magnetische Wechselfeld vorzugsweise mit einem hochfrequenten Wechselstrom erzeugt wird.

Selbstverständlich ist das Verschweißen der in Längsrichtung des Hohlprofils verlaufenden Bandkanten auf Stoß auch mit anderen Schweißverfahren, wie etwa Laserschweißen, denkbar, allerdings scheidet der Einsatz anderer Schweißverfahren derzeit oftmals aus wirtschaftlichen Gründen aus. So können mit herkömmlichen Reibschweißverfahren Schweißgeschwindigkeiten von bis zu 20 m/min erreicht werden, während mit Laserschweißen zurzeit lediglich eine Schweißgeschwindigkeit von etwa 3 m/min erzielbar ist.

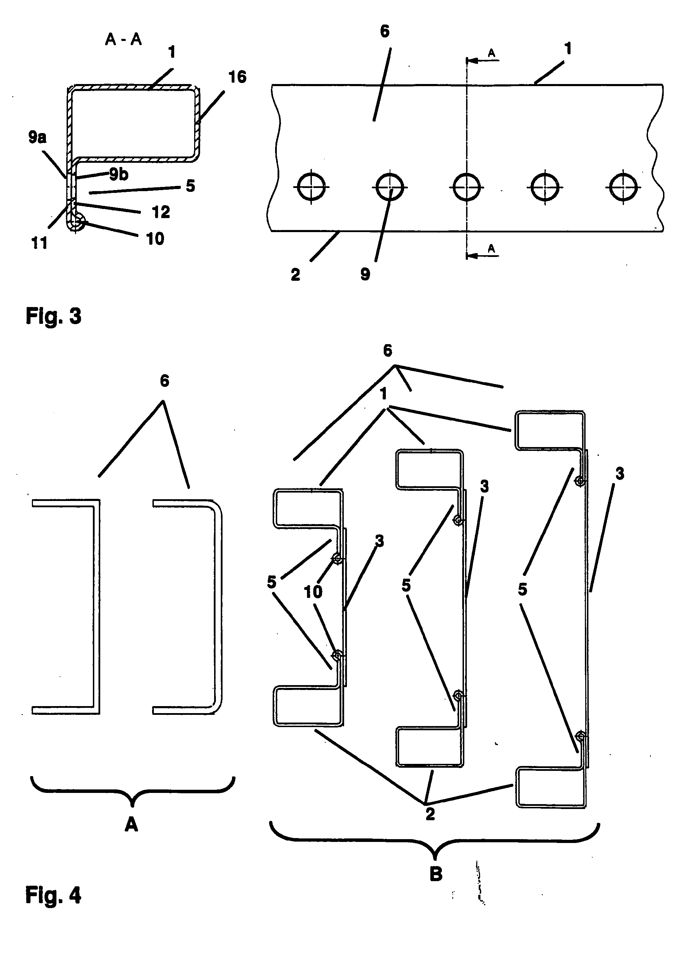

Figur 3 zeigt die Schnittansicht sowie eine Seitenansicht eines Hohlprofils 1 mit einstückig angeformter Lasche 5. In der Lasche 5 sind Durchgangslöcher 9 vorgesehen, die auf bevorzugte Weise durch Ausstanzen und/oder Bohren hergestellt werden. Wie der Schnittdarstellung in Figur 3 deutlich zu entnehmen ist, variiert der Durchmesser des Durchgangsloches 9 über dessen Längsachse. So weist das Durchgangsloch 9 im Bereich des in Einbaulage des Rahmenlängsträgers 6 äußeren Wandbereichs 11 befindlichen Lochs 9a einen größeren Durchmesser auf, als das Loch 9b, das die innen liegende, dem gegenüber liegenden Rahmenlängsträger zugewandte Wand 12 durchörtert. Beide Löcher 9a, 9b, also sowohl das Loch 9a in der äußeren Lage als auch der inneren Lage der Lasche 5 werden bevorzugt durch Stanzen hergestellt, wobei der Durchmesser des Loches 9a in der in Einbaulage des Rahmenlängsträger außen liegenden Lage der Lasche um etwa 2 mm größer als das Loch 9b in der inneren Lage der Lasche 5 ist. Der Durchmesser des Loches 9b in der Innenwand der Lasche 5 beträgt hierbei vorzugsweise 15,5 mm.

Figur 4 zeigt in einer Schnittansicht einen Vergleich zwischen herkömmlich und erfindungsgemäß ausgeführten Rahmenlängsträgern 6. Hierbei zeigt die Fig. 4A Schnittansichten zweier klassisch mit U-Profil ausgeführter Rahmenlängsträger 6. Die Rahmenlängsträger sind einstückig ausgeführt und werden in Einbaulage mit einander zugewandten Öffnungen angeordnet. Die Ecken der Profile werden wahlweise abgerundet ausgeführt.

In Figur 4B sind drei erfindungsgemäß ausgeführte Rahmenlängsträger 6 jeweils in einer Schnittansicht dargestellt. Die drei Rahmenlängsträger unterscheiden sich vor allem durch eine unterschiedliche Länge der Verbindungselemente 3, so dass der Abstand zwischen Ober- und Untergurt variiert. Die Ober- und Untergurte werden jeweils durch Hohlprofile 1, 2 gebildet, die über vertikal angeordnete Verbindungselemente 3 miteinander verbunden sind. Die Verbindungselemente 3 sind bei der gezeigten Ausführungsform jeweils im äußeren Bereich der Lasche 5 befestigt.

Die Figur 4B macht deutlich, dass aufgrund der erfindungsgemäßen Ausführung eines Rahmenlängsträgers 6 der vertikale Abstand zwischen Ober- und Untergurt in Abhängigkeit der jeweiligen konstruktiven Anforderungen weitgehend frei festlegbar ist. Insbesondere ist der Abstand nicht durch die Stegbreite eines Längsträgerprofils limitiert, wie es insbesondere bei einem Rahmenlängsträger klassischer Bauform mit halboffenem Profil, in der Regel mit U-Profil, der Fall ist. Somit ist der Abstand zwischen Ober- und Untergurt variabel, indem die Länge des vertikal angeordneten Verbindungselementes 3 den jeweiligen Bedürfnissen angepasst wird. Eine Veränderung der Ober- und/oder Untergurte, insbesondere des Hohlprofils 1, 2, ist somit für eine Veränderung des vertikalen Abstands der Gurte nicht erforderlich.

Wesentlich an der erfindungsgemäßen Lösung ist insbesondere, dass bei vergleichbaren äußeren Abmessungen der Rahmenlängsträgerprofile, wie sie bspw. die beiden in Figur 4 A gezeigten Rahmenlängsträger 6 klassischer Bauform sowie der in Figur 4B ganz links dargestellte, erfindungsgemäß ausgeführte Rahmenlängsträger aufweisen die Flächenträgheitsmomente trotz geringerer Wandstärke des gemäß der Erfindung verwendeten Profils, das in Figur 4B ganz links zu sehen ist, gleich sind. In dem dargestellten Ausführungsbeispiel beträgt die Wandstärke der beiden in Figur 4A gezeigten Profile 8 mm, während das linke Profil in Figur 4B eine Wandstärke von 3,5 mm aufweist. Bei einer Länge der kurzen Schenkel von 85 mm und des Stegs von jeweils 270 mm ergibt sich für die beiden Profile gemäß Figur 4A ein Flächenträgheitsmoment um die parallel zum langen Schenkel der Profile verlaufende y-Achse zwischen 3,26 und 3,43 10⁷ mm⁴ und um die orthogonal zur Bildoberfläche verlaufende z-Achse von 2,01 bis 2,04 10⁶ mm⁴. Im Vergleich hierzu beträgt das Flächenträgheitsmoment für das erfindungsgemäß ausgeführte Profil gemäß Figur 4B, ganz links 3,41 10⁷ mm⁴ um die y-Achse und 2,94 10⁶ mm⁴ um die z-Achse.

Wie diese Zahlen verdeutlichen, lassen sich mit einem erfindungsgemäß ausgeführten Rahmenlängsträger trotz reduzierter Wandstärke gegenüber herkömmlich ausgebildeten Rahmenlängsträgern vergleichbare Flächenträgheitsmomente erzielen, so dass auf diese Weise erhebliche Gewichtseinsparungen realisierbar sind.

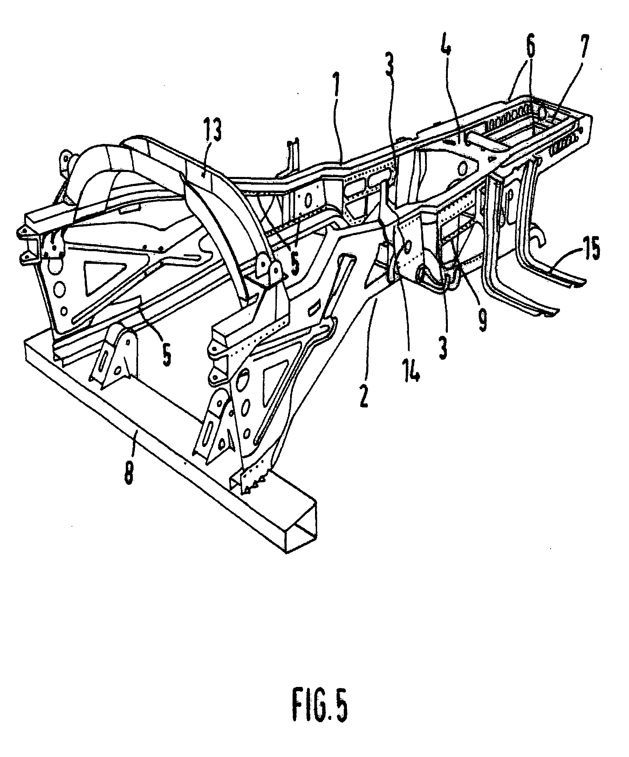

Figur 5 zeigt einen Fahrgestellrahmen eines zweiachsigen Lastkraftwagens, wie er hauptsächlich für Sattelzugmaschinen verwendet wird. Entsprechend den Anforderungen an die konstruktive Gestaltung des Fahrzeugs, insbesondere die Anordnung der Antriebseinheit sowie der Achse mit deren Anlenkung, sind zwei obere 1 und zwei untere Hohlprofile 2 als Ober- bzw. Untergurte mit vollständig außerhalb der Hohlprofile 1, 2 befindlichen Laschen 5 vorgesehen. Die Hohlprofile 1, 2 der Gurte sind in Längsrichtung sowohl in horizontaler als auch in vertikaler Richtung derart verformt, dass sie auf bevorzugte Weise an den Platzbedarf und die konstruktiven Vorgaben hinsichtlich der übrigen Fahrzeugkomponenten angepasst sind.

Die oberen und unteren Hohlprofile 1, 2 sind in vertikaler Richtung über Verbindungselemente 3 miteinander verbunden. In horizontaler Richtung sind Querträger 4, eine Domstrebe 13 sowie ein Schlussquerträger 7 vorgesehen.

Im vorderen Bereich des Fahrzeugs ist zusätzlich zur Domstrebe 13 ein Unterfahrschutz 7 über ein Verbindungselement 3 mittelbar mit dem als geschlossenem Hohlprofil 2 ausgeführten Untergurt verbunden. Ferner ist im mittleren Bereich des Rahmenlängsträgers 6 ein Halter der hinteren Fahrerhauslagerung 14 der gleichzeitig die Funktion eines Verbindungselements 3 zwischen dem Ober- und dem Untergurt übernimmt. Das Verbindungselement 3 und der Halter 14 sind in diesem Fall einstückig ausgeführt. Im Hinteren Bereich des Rahmenlängsträgers 6 sind weiterhin zwei Halter 15 für den Tank mit Hilfe entsprechend geeigneter Schraubverbindungen an den Laschen 5 der Verbindungselemente 3 befestigt. Darüber hinaus verfügen die übrigen Verbindungselemente 3 über eine Vielzahl von Durchgangsbohrungen 9, die der Befestigung weiterer Fahrzeugkomponenten dienen können.

Wie die verschiedenen Ausführungsformen zeigen, beruht der erfindungsgemäße Gedanke darauf, das klassische Konzept der Verwendung eines einstückigen Rahmenlängsträgers 6 dahingehend zu verlassen, dass der Ober- und/oder der Untergurt durch ein geschlossenes Hohlprofil 1, 2 gebildet werden, wobei die Gurte durch separate, zumindest nahezu vertikal angeordnete Verbindungselemente 3 mit einander verbunden werden. Hierbei ist am Ober- und/oder Untergurt wenigstens eine Lasche 5 angeformt, die eine Befestigung der Verbindungselemente 3 an den Gurten eines Rahmenlängsträgers 6 ermöglicht. Die wenigstens eine Lasche 5 kann gemeinsam mit dem geschlossenen Profil 1, 2 mittels eines urformenden oder umformenden Verfahrens einstückig hergestellt werden. Genauso ist es denkbar, die Lasche 5 als separates Bauteil herzustellen und mittels geeigneter Befestigungsmittel bzw. -technologien mit dem Hohlprofil 1, 2 zu verbinden.

Durch die Auflösung des klassischen, einen Rahmenlängsträger mit halboffenem Profil aufweisenden Rahmenkonzepts besteht die Möglichkeit, die beiden Gurte voneinander losgelöst dem Kraftfluss anzupassen. Die Verbindung des Obergurts mit dem Untergurt kann, wie zuvor dargestellt worden ist, durch unterschiedliche, zumindest weitgehend vertikal angeordnete Verbindungselemente 3 realisiert werden. Die Verbindungselemente 3 können gebogen, gepresst oder anderweitig hergestellt sein. Ferner können diese Elemente grundsätzlich einteilig oder als eine aus mehreren Teilen zusammengesetzte Baugruppe ausgeführt sein. Darüber hinaus ist es weiterhin denkbar, dass die Verbindungselemente 3 jeweils wenigstens eine weitere Funktion, insbesondere Feder- und/oder Dämpfereinheit und/oder als Halter 14, 15, einer anderen Fahrzeugkomponente übernehmen oder durch diese Komponente gebildet werden. Ferner ermöglicht die vorzugsweise durchgehende Lochung 9 der Lasche 5 einen variablen und vergleichsweise einfachen Anbau von Fahrzeugbauteilen direkt an der Innen- und/oder Außenseite eines Rahmenlängsträgers 6.

Der Ober- und/oder der Untergurt ist/sind zur Realisierung hoher Steifigkeitswerte als geschlossene Hohlprofile 1, 2 ausgeführt und verfügen über eine integrierte Lasche 5 zur Anbindung der Verbindungselemente 3. Auf bevorzugte Weise können derartige Hohlprofile 1, 2 als Endlosprofile hergestellt und danach insbesondere durch Biegen in die nötige Form gebracht werden. Derartige Profile können mit bekannten Verfahren, wie etwa Biegen, Schweißen oder Extrudieren hergestellt werden.

### Bezugszeichenliste

- 1: oberes Hohlprofil
- 2: unteres Hohlprofil
- 3: Verbindungselement
- 4: Querträger
- 5: Lasche
- 6: Rahmenlängsträger
- 7: Schlussquerträger
- 8: Unterfahrschutz
- 9: Durchgangsloch
9a Durchgangsloch in der äußeren Wand der Lasche
9b Durchgangsloch in der inneren Wand der Lasche
- 10: Schlaufe
- 11: äußerer Wandbereich des Rahmenlängsträgers
- 12: innerer Wandbereich des Rahmenlängsträgers
- 13: Domstrebe
- 14: Halter für Abgasanlagenbauteil
- 15: Halter für Tank

## Patentansprüche

1. Rahmenlängsträger eines Nutzfahrzeugs, der jeweils einen aus einem Profil (1, 2) gebildeten Ober- und einen Untergurt aufweist, die durch zumindest annähernd vertikal angeordnete Verbindungselemente (3) mit einander verbunden sind,
wobei Ober- sowie Untergurt und Verbindungselement (3) als separate Bauteile ausgeführt sind,
**dadurch gekennzeichnet, dass** wenigstens eines der Profile (1, 2), die jeweils den Ober- und den Untergurt bilden, als geschlossenes, einen Rechteck- oder Quadratquerschnitt aufweisendes Hohlprofil ausgeführt ist, an dem zumindest eine Lasche (5) zur Befestigung des Verbindungselements (3) vorgesehen ist, die einstückig mit dem Hohlprofil ausgeführt ist, und das Hohlprofil (1, 2) aus einem Biegeprofil hergestellt ist.

2. Rahmenlängsträger nach Anspruch 1,
**dadurch gekennzeichnet, dass** das Hohlprofil (1, 2) und/oder die Lasche (5) Aluminium und/oder eine Aluminiumlegierung aufweist.

3. Rahmenlängsträger nach einem der Ansprüche 1 bis 2,
**dadurch gekennzeichnet, dass** das Hohlprofil (1, 2) und/oder die Lasche (5) einen Kunststoff und/oder einen Kunststoffverbundstoff aufweist.

4. Rahmenlängsträger nach einem der Ansprüche 1 bis 3,
**dadurch gekennzeichnet, dass** das Hohlprofil (1, 2) einen gewinkelten Querschnitt aufweist.

5. Rahmenlängsträger nach einem der Ansprüche 1 bis 4,
**dadurch gekennzeichnet, dass** die Lasche (5) durch eine Schweißverbindung mit dem Verbindungselement (3) verbunden ist.

6. Rahmenlängsträger nach einem der Ansprüche 1 bis 5,
**dadurch gekennzeichnet, dass** die Lasche (5) wenigstens eine Ausnehmung (9) aufweist, die zur Aufnahme einer Schraube oder einer Niet geeignet ist.

7. Rahmenlängsträger nach einem der Ansprüche 1 bis 6,
**dadurch gekennzeichnet, dass** das Verbindungselement (3) zumindest ein Anschlusselement zur mittelbaren oder unmittelbaren Befestigung einer weiteren Fahrzeugkomponente aufweist.

8. Rahmenlängsträger nach einem der Ansprüche 1 bis 7,
**dadurch gekennzeichnet, dass** das Verbindungselement (3) zumindest einen Teil einer Dämpfer- und/oder Federeinheit aufweist.

9. Rahmenlängsträger nach einem der Ansprüche 1 bis 8,
**dadurch gekennzeichnet, dass** das Verbindungselement (3) zumindest einen Teil einer Luftfedereinheit aufweist.

10. Rahmenlängsträger nach einem der Ansprüche 1 bis 9,
**dadurch gekennzeichnet, dass** das geschlossene Hohlprofil (1, 2) mittels einer Längsnahtschweißung verschlossen ist.

11. Verfahren zur Herstellung eines Rahmenlängsträgers (6) nach einem der Ansprüche 1 bis 10,
**dadurch gekennzeichnet, dass** ein Ober- und ein Untergurt hergestellt werden, indem mittels Rollbiegen aus einem Bandstahl oder einem Profil ein Endloshohlprofil mit angeformter Lasche (5) erzeugt wird, wobei eine im Bereich des Hohlprofils (1, 2) verbleibende Längsnut verschweißt wird, und dass der Ober- und der Untergurt durch ein Verbindungselement (3), das jeweils an den Laschen (5) des Ober- und des Untergurts befestigt wird, verbunden werden.

12. Verfahren nach Anspruch 11,
**dadurch gekennzeichnet, dass** die Längsnut mittels Pressschweißen verschweißt wird.

13. Verfahren nach Anspruch 11 oder 12,
**dadurch gekennzeichnet, dass** an einem dem Hohlprofil (1, 2) abgewandten Ende der Lasche (5) eine Schlaufe (10) gebogen wird.

## Claims

1. A frame side support of a commercial vehicle, the frame side support in each case having an upper flange and a lower flange which are formed from a profile (1, 2) and are connected to each other by connecting elements (3) arranged at least approximately vertically,
wherein upper flange and lower flange and connecting element (3) are designed as separate components,
**characterized in that** at least one of the profiles (1, 2) respectively forming the upper flange and the lower flange is designed as a closed hollow profile which has a rectangular or square cross section and on which at least one tab (5) for the fastening of the connecting element (3) is provided, said tab being formed integrally with the hollow profile, and the hollow profile (1, 2) being produced from a bent profile.

2. The frame side support according to Claim 1,
**characterized in that** the hollow profile (1, 2) and/or the tab (5) have/has aluminium and/or an aluminium alloy.

3. The frame side support according to either of Claims 1 and 2,
**characterized in that** the hollow profile (1, 2) and/or the tab (5) have/has a plastic and/or a plastics composite.

4. The frame side support according to one of Claims 1 to 3,
**characterized in that** the hollow profile (1, 2) has an angled cross section.

5. The frame side support according to one of Claims 1 to 4,
**characterized in that** the tab (5) is connected to the connecting element (3) by a welded joint.

6. The frame side support according to one of Claims 1 to 5,
**characterized in that** the tab (5) has at least one recess (9) which is suitable for receiving a screw or a rivet.

7. The frame side support according to one of Claims 1 to 6,
**characterized in that** the connecting element (3) has at least one joining element for the indirect or direct fastening of a further vehicle component.

8. The frame side support according to one of Claims 1 to 7,
**characterized in that** the connecting element (3) has at least part of a damper unit and/or spring unit.

9. The frame side support according to one of Claims 1 to 8,
**characterized in that** the connecting element (3) has at least part of a pneumatic spring unit.

10. The frame side support according to one of Claims 1 to 9,
**characterized in that** the closed hollow profile (1, 2) is closed by means of longitudinal seam welding.

11. A method for producing a frame side support (6) according to one of Claims 1 to 10,
**characterized in that** an upper flange and a lower flange are produced by an endless hollow profile having an integrally formed tab (5) being produced from a steel strip or a profile by means of edge rolling, wherein a longitudinal groove remaining in the region of the hollow profile (1, 2) is welded, and **in that** the upper flange and the lower flange are connected by a connecting element (3), which is fastened in each case to the tabs (5) of the upper flange and of the lower flange.

12. The method according to Claim 11,
**characterized in that** the longitudinal groove is welded by means of press welding.

13. The method according to Claim 11 or 12,
**characterized in that** a loop (10) is bent at an end of the tab (5) that faces away from the hollow profile (1, 2).

## Revendications

1. Support longitudinal de châssis d'un véhicule utilitaire, qui présente une poutre supérieure et une poutre inférieure respectivement formées par un profilé (1, 2), qui sont repliées l'une à l'autre par des éléments de liaison (3) disposés au moins à peu près verticalement, dans lequel la poutre supérieure ainsi que la poutre inférieure et l'élément de liaison (3) sont des composants réalisés séparément, **caractérisé en ce qu'**au moins un des profilés (1, 2), qui forment respectivement la poutre supérieure et la poutre inférieure, est réalisé sous la forme d'un profilé creux fermé, présentant une section transversale rectangulaire ou carrée, sur lequel il est prévu au moins une aile (5) pour la fixation de l'élément de liaison (3), qui est réalisés d'une seule pièce avec le profilé creux, et le profilé creux (1, 2) est fabriqué à partir d'un profilé plié.

2. Support longitudinal de châssis selon la revendication l, **caractérisé en ce que** le profilé creux (1, 2) et/ou l'aile (5) présente de l'aluminium et/ou, un alliage d'aluminium.

3. Support longitudinal de châssis selon l'une des revendications 1 à 2, **caractérisé en ce que** le profilé creux (1, 2) et/ou l'aile (5) présente une matière plastique et/ou un matériau composite en matière plastique.

4. Support longitudinal de châssis selon l'une quelconque des revendications 1 à 3, **caractérisé en ce que** le profilé creux (1, 2) présente une section transversale coudée.

5. Support longitudinal de châssis selon l'une quelconque des revendications 1 à 4, **caractérisé en ce que** l'aile (5) est assemblée à l'élément de liaison (3) par un assemblage soudé.

6. Support longitudinal de châssis selon l'une quelconque des revendications 1 à 5, **caractérisé en ce que** l'aile (5) présente au moins une découpe (9), qui est destinée à recevoir une vis ou un rivet.

7. Support longitudinal de châssis selon l'une quelconque des revendications 1 à 6, **caractérisé en ce que** l'élément de liaison (3) présente au moins un élément de raccordement pour la fixation directe ou indirecte d'un autre composant du véhicule.

8. Support longitudinal de châssis selon l'une quelconque des revendications 1 à 7, **caractérisé en ce que** l'élément de liaison (3) présente au moins une partie d'une unité d'amortisseur et/ou de suspension.

9. Support longitudinal de châssis selon l'une quelconque des revendications 1 à 8, **caractérisé en ce que** l'élément de liaison (3) présente au moins une partie d'une unité d'amortisseur pneumatique.

10. Support longitudinal de châssis selon l'une quelconque des revendications 1 à 9, **caractérisé en ce que** le profilé creux fermé (1, 2) est fermé au moyen d'une soudure longitudinale.

11. Procédé de fabrication d'un support longitudinal de châssis (6) selon l'une quelconque des
revendications 1 à 10, **caractérisé en ce que** l'on fabrique une poutre supérieure et une poutre inférieure en produisant, par roulage à partir d'un feuillard d'acier ou d'un profilé, un profil creux sans fin avec une aile façonnée (5), dans lequel on soude une rainure longitudinale permanente dans la région du profilé creux (1, 2), et **en ce que** l'on relie la poutre supérieure et la poutre inférieure au moyen d'un élément de liaison (3), qui est fixé respectivement aux ailes (5) de la poutre supérieure et de la poutre inférieure,

12. Procédé selon la revendication 11, **caractérisé en ce que** l'on soude la rainure longitudinale par soudage par pression.

13. Procédé selon la revendication 11 ou 12, **caractérisé en ce qu'**une boucle (1C) est cintrée à une extrémité de l'aile (5) située à l'opposé du profilé creux (1, 2).
